# EUROPEAN PATENT SPECIFICATION

(11) **EP 1 389 934 B1**
(45) Date of publication and mention of the grant of the patent: **09.11.2005**
(21) Application number: 02732708.9
(22) Date of filing: 10.05.2002
(51) Int. Cl.: A47J 31/06

(54) **FILTERING-HOLDING CUP FOR A COFFEE MACHINE AND PROCEDURE FOR PRODUCING A DRINK OF COFFEE**
FILTERBEHÄLTEREINSATZ FÜR EINE KAFFEEMASCHINE UND VERFAHREN ZUM ZUBEREITEN EINES KAFFEEGETRÄNKS
RECIPIENT PORTE-FILTRE POUR MACHINE A CAFE, ET PROCEDE PERMETTANT LA PRODUCTION D'UNE BOISSON DE CAFE

(30) Priority: 11.05.2001 IT MI20010972
(43) Date of publication of application: 25.02.2004
(73) Proprietor: DE' LONGHI S.p.A., 31100 Treviso (IT)
(72) Inventor: DE' LONGHI, Giuseppe, I-31100 Treviso (IT)
(74) Representative: Rapisardi, Mariacristina
(86) International application number: PCT/EP2002/005153
(87) International publication number: WO 2002/091889

(56) References cited:
- DE-A- 4 037 366
- US-A- 4 644 856
- US-A- 5 638 740
- US-B2- 6 412 394

## Description

The present invention refers to a filter-holding cup for a coffee machine and to a procedure for producing a drink of coffee.

As is known, coffee machines have a filter-holding cup in which the filter is inserted.

The filter usually has a flat structure and is equipped with a plurality of small sized through holes which allow the drink to pass through but which contain the coffee powder as shown in US 5 150 645 A.

Moreover, the filter in some cases carries a dispenser which sprays the drink of coffee against the base of the cup, so as to produce a minimum amount of froth.

The drink of coffee produced with traditional cups is finally relenhanced through two lower openings to fill two coffee cups.

Nevertheless in traditional cups the distribution of the drink to the two openings (and therefore to the two coffee cups) is not uniform, i.e. the drink usually tends to head towards one of the openings according to how the liquid jet is directed.

This can be due both to the elastic characteristics of the dispenser itself and to possible impurities which could partially block its passage.

Moreover, cups of the traditional type allow drinks of coffee to be produced which have a small amount of froth.

The technical task proposed for the present invention is, therefore, that of eliminating the outlined technical drawbacks of the prior art, realising a filter-holding cup for a coffee machine which allows the drink itself to be distributed uniformly between the discharge openings.

In this technical task a purpose of the invention is that of realising a filter-holding cup for a coffee machine and a procedure for producing a drink of coffee which allow a.drink of coffee with a lot of froth to be produced.

The last but not least purpose of the invention is that of realising a filter-holding cup for a coffee machine which allows access to all of its components and which, therefore, can be cleaned in a fast and simple manner. The technical task, as well as these and other purposes, according to the present invention are achieved by the features of claim 1.

The present finding also refers to a procedure for producing a drink of coffee, as defined in claim 16.

Other embodiments of the present invention are defined, moreover, in the other claims.

Further characteristics and advantages of the invention shall become clearer from the description of a preferred but not exclusive embodiment of the filter-holding cup for a coffee machine and of the procedure for producing a drink of coffee according to the finding, where the cup is illustrated for indicating and not limiting purposes in the attached-drawings, in which:
- figure 1 shows a schematic longitudinal section view of a portion of cup according to the finding;
- figure 2 shows a cross section of the filter which is not according to the invention;
- figure 3 shows a 90° rotated section view of the filter of figure 2 which is not according to the invention;
- figure 4 shows a cross section of a second filter which is not according to the invention;
- figure 5 shows a 90° rotated section view of the filter of figure 4 which is not according to the invention;
- figure 6 shows a cross section of a third filter which is not according to the invention; and
- figure 7 shows a 90° rotated section view of the filter of figure 6 which is not according to the invention.

The cup 1 comprises a dispenser 3, associated with the filter 2. suitable for spraying a drink of coffee against a side surface extending substantially perpendicular with respect to the surface of a filtering wall 13 of the filter.

The dispenser 3 is connected to a base of the filter 2, preferably in a central position, and is housed in a chamber defined between the filter 2 itself and the cup 1.

Advantageously, an enhanced passage of air is defined between the cup 1 and the filter 2.

Such an enhanced passage comprises a groove 5 of the free edge of the cup 1, and an interspace 6 defined between the cup 1 and the filter itself 2.

Moreover, since the dispenser 3 must preferably spray the drink of coffee near to the enhanced passage 5, 6, the cup 1 and/or the filter 2 have set reciprocal positioning means which comprise a bent tab 7, which protrudes from the free edge 8 of the filter 2.

The tab 7 is inserted into a grooved seat 9 of the cup 1.

The dispenser 3 duly comprises a self-cleaning device 30 capable of allowing the automatic expulsion of possible residue or coffee particles which could hinder, as shall be specified more clearly, the formation of froth.

The self-cleaning device 30 comprises a disk element 31 having at its centre a passage 32 for the drink of coffee coming out of the filtering wall 13.

Inside the passage 32 a valve 33 for closing said passage is housed.

Between the valve and the disk element a hole 34 is foreseen to let out the drink of coffee.

The valve 33 has a disk 35 and is mobile in said housing in contrast to and by means of the action of elastic means and in particular of a spring 36.

In the case of the hole 34 being blocked by residue or coffee particles the increase in pressure determines the displacement of the disk 35 equally allowing the dispensing of the drink of coffee and, consequently, allowing the body which blocked the hole 34 to be carried away.

The filter 2 has an annular gasket 37 to associate the disk element with the filtering wall and at the same time to realise a seal on the sides and on the base of the filter 2.

At the bottom of the disk element there is a bush 38 for attaching said disk element and said filtering wall to said filter.

The bush has a base 39 and at least two slits 40 through which the drink of coffee can escape.

With this solution, advantageously, the drink of coffee coming out of the hole 34 is directed against the surface of the bush defined by the threads thereof which are arranged on the front of the outlet hole 34.

In this way there is an air back-flow through the slits 40 which mixes with the drink of coffee sprayed against the threads 41.

Such a solution allows a substantial formation of froth to be obtained which is then dispensed into the plastic bottom 45 of the cup and from here through the openings 16 into the coffee cups.

The cup 1, moreover, has a first chamber 11 inside the filter 2, and a second chamber 12 interposed between the filtering wall 13 of the filter 2 and the dispenser 3.

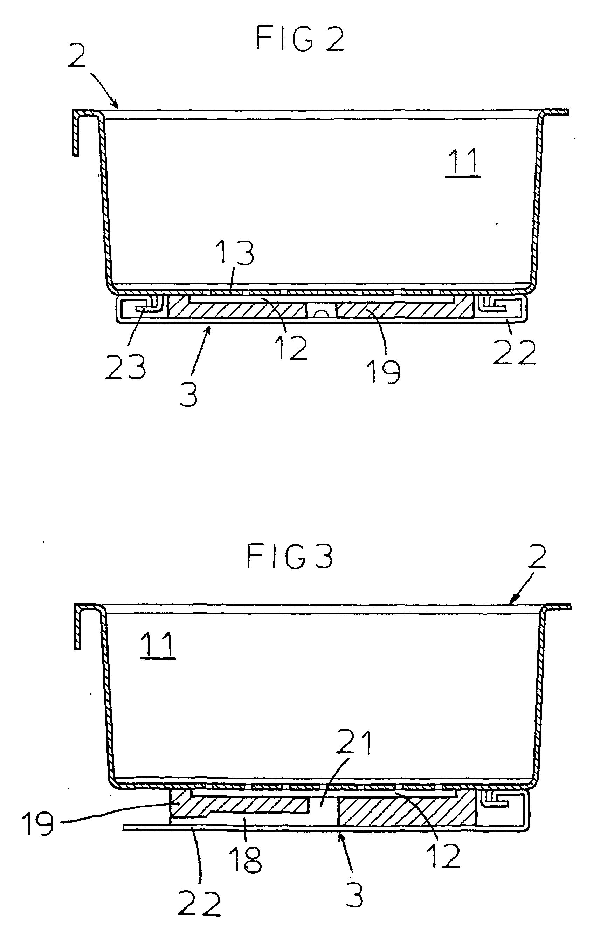

In a different cup 1 (shown in figures 2 and 3) such a filtering wall 13 constitutes the base of the filter; however, in others (for example shown in figures 2 and 3) the filtering wall 13 is connected inside the filter 2 in a removable or non-removable manner.

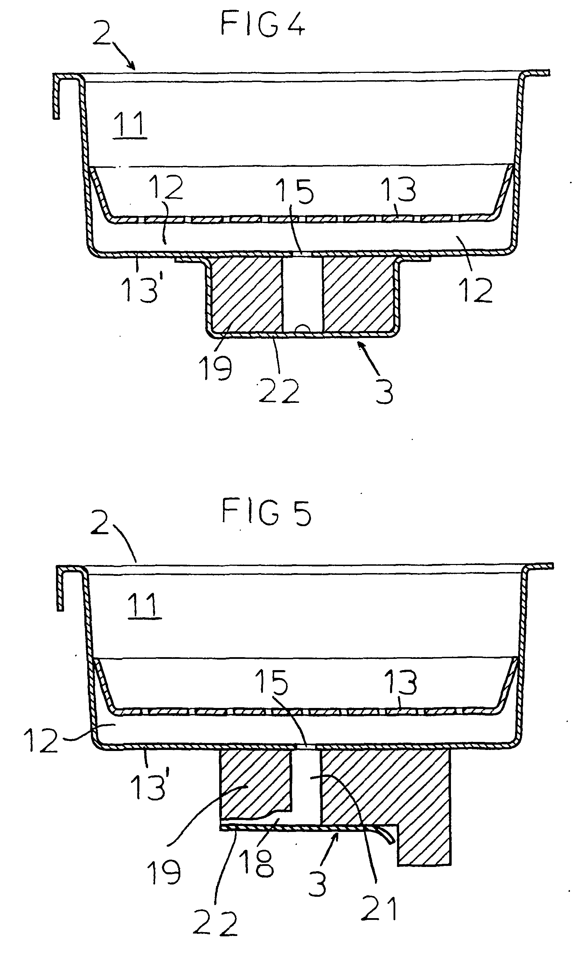

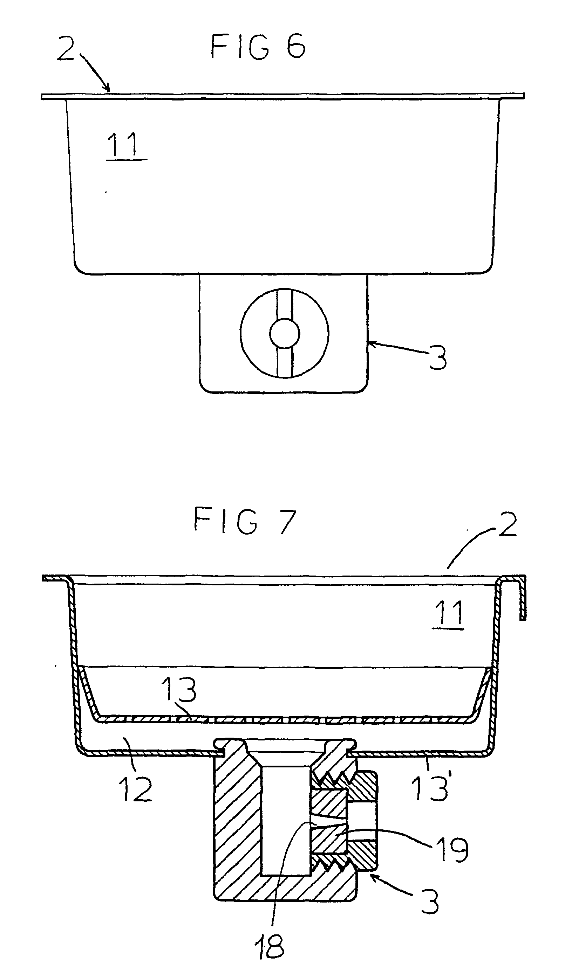

When the filtering wall 13 is inside the filter 2 (figures 4 and 5, 6 and 7), the base 13' of the filter 2 has an opening 15 for the passage of the drink of coffee to feed the dispenser 3.

In correspondence with the openings 16 the cup 1 has raised ribs 17 for guiding the drink of coffee.

Such ribs 17 are arranged perpendicular to the flow of the drink of coffee so that said coffee, after having hit the threads 41 and having escaped through the slits 40, runs on the bottom 45 up to the opening 16.

In this way one manages to guarantee a very uniform dispensing between the two openings 16.

In the examples shown in figures 2-7, the dispenser 3 comprises a passage which has at least one substantially converging first portion, preferably formed in an element made of elastically ductile material such as rubber or plastic.

The passage also has a. second portion 21 which is inclined with respect to the first portion 18 and which is arranged substantially vertically.

Moreover, the dispenser 3 comprises a rigid element 22, connected to the filter 2, suitable for at least partially containing the elastically ductile element 19.

Moreover, as shown in figures 2, 3, 4 and 5, a portion of the passage is bound by the rigid element 22 itself and the elastically ductile element 19 is removably connected between the base of the filter 2 and the rigid element 22.

Advantageously, the passage 18, 21 realised in this way tends not to become blocked or at least only becomes blocked to a very limited degree.

Moreover, the passage 18, 21 can be cleaned and freed of possible elements which might block it in a very simple manner.

In figures 2 and 3 the rigid element 22 is removably connected on guides 23 integral with the base of the filter 2.

In this solution the rigid element 22 can be removed and, together with this, the element made of ductile material 19 can also be removed.

The cup 1 according to the finding also comprises a handle 24 to be connected, which allows the cup 1 to be mounted onto and detached from the machine in a very simple and fast manner.

The handle 24 has a pivot 25 to which a hooking element 26 is rotatably connected suitable for locking a portion of the filter 2 against a corresponding portion of the cup 1, when the coffee powder contained in the filter 2 is discharged.

The operation of the filter-holding cup for a coffee machine according to the invention can be seen clearly from that which has been described and illustrated and, in particular, it is substantially the following.

The water crosses the chamber 11 of the filter 2 and forms the drink of coffee which, passing through the filtering wall 13 is introduced into the chamber 12.

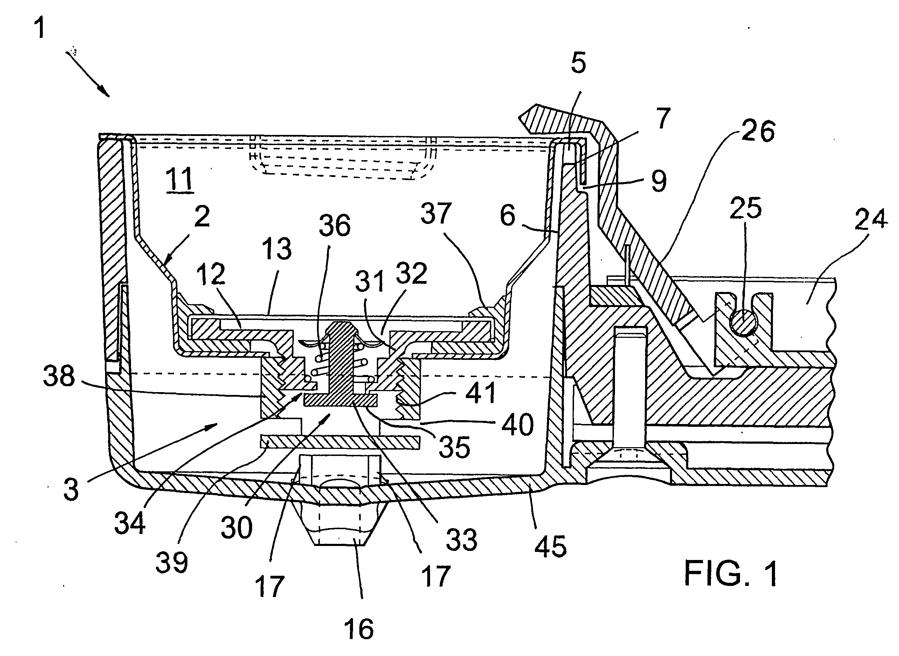

In the solution represented in figure 1, from the chamber 12 the drink enters into the passage 32 and comes out of the hole 34 in a direction which is substantially parallel to the filtering wall 13.

Then the drink is sprayed against the surface and the threads 41 of the bush 38 capturing bubbles of air and forming a substantial froth.

At the same time the air flows back from the enhanced passage 5 and 6 and from the slits 40 with a further capturing of air in the drink and formation of froth.

The froth then comes out of the slits 40 and the two openings 16.

In figures 2-7, from the chamber 12 the drink of coffee enters into the portion 21 of the passage and then into the converging portion 18.

The converging portion 18 is always directed towards the side wall of the bottom 45 and, therefore, always sprays the drink of coffee against such a wall forming froth.

Even when due to pressure the end of the passage deforms the drink is still sprayed against the side wall of the bottom 45 and, swirling around the ribs 17, the drink is dispensed by the two openings in practically equal amounts.

Moreover, the emission of the drink from the cup draws in air from the enhanced passage 5 and 6 which is introduced into the cup 1 and mixes with the drink of coffee with a further capturing of air in the drink and the formation of froth.

The cleaning operations are all extremely simple to carry out because the cup according to the finding is capable of being completely disassembled, to allow access to all of its parts.

A procedure for producing a drink of coffee is also object of the present invention.

According to such a procedure as defined in claim 16 the ready formed drink of coffee is sprayed through the dispenser 3, capturing a first amount of air and forming froth, and is subsequently mixed with a flow of air, capturing a second amount of air and forming further froth.

In this way the drink of coffee which is obtained is very rich in froth.

In a preferred embodiment of the procedure the drink of coffee is formed inside the filter-holding cup 1 and, when it is released from the cup 1 through the openings 16, it draws in the current of air which mixes with the drink of coffee subsequently sprayed by the dispenser 3.

In practice it has been noted how the filter-holding cup for a coffee machine and a procedure for producing a drink of coffee according to the invention are particularly advantageous because they allow a drink of coffee which is rich in froth to be formed and, at the same, they allow such a drink to be distributed in a uniform manner to two (or more) coffee cups.

The filter-holding cup for a coffee machine and the procedure for producing a drink of coffee thus conceived are susceptible to numerous modifications and variants, all covered by the inventive concept; moreover, all of the details can be replaced with technically equivalent elements as defined in the claims.

In practice, the materials used, as well as the sizes, can be whatever according to the requirements and the state of the art.

## Claims

1. Filter-holding cup (1) of a coffee machine, comprising a dispenser (3), associated with said filter (2) and having a spraying outlet (34, 18) extending substantially parallel with respect to the surface of a filtering wall (13) of said filter, suitable for spraying a drink of coffee against a side surface extending substantially perpendicular with respect to said surface of a filtering wall (13) of said filter, **characterised in that** said side surface is defined by the threads of a bush, arranged on the front of said outlet.

2. Cup (1) according to claim 1, **characterised in that** it comprises an enhanced air passage (5, 6) defined between said cup (1) and said filter (2).

3. Cup (1) according to one or more of the previous claims, **characterised in that** said enhanced passage (5, 6) comprises at least one groove (5) of a free edge of said cup, and an interspace (6) between said cup (1) and sai d filter (2).

4. Cup (1) according to one or more of the previous claims, **characterised in that** it comprises set arrangement means (7, 9) of said filter (2) with respect to said cup (1).

5. Cup (1) according to one or more of the previous claims, **characterised in that** said set arrangement means (7, 9) comprise a bent tab (7) protruding from a portion of free edge (8) of said filter (2) and inserted in a grooved seat (9) of said cup (1).

6. Cup (1) according to one or more of the previous claims, **characterised in that** said dispenser (3) comprises a self-cleaning device (30).

7. Cup (1) according to one or more of the previous claims, **characterised in that** said self-cleaning device comprises a disk element (31) having at its centre a passage (32) for housing a valve (33) for closing said passage, between said valve and said disk element being foreseen an outlet hole (34) for said drink of coffee.

8. Cup (1) according to one or more of the previous claims, **characterised in that** said valve has a disk (35) which is mobile in said housing in contrast to and by means of the action of elastic means (36).

9. , Cup (1) according to one or more of the previous claims, **characterised in that** it has' an annular gasket (37) for associating said disk element with said filtering wall.

10. Cup (1) according to one or more of the previous claims, **characterised in that** said bush (38) is intended for attaching said disk element and said filtering wall to said filter.

11. Cup (1) according to one or more of the previous claims, **characterised in that** said bush has a base (39) and at least two outlet slits (40) of said drink.

12. Cup (1) according to .one or more of the previous claims, **characterised in that** it comprises at least one first chamber (11) inside said filter (2), and a second chamber (12) interposed between the filtering wall (13) of said filter (2) and said dispenser (3).

13. Cup (1) according to one or more of the previous claims, **characterised in that** in correspondence with discharge openings (16) of said drink of coffee formed on a base of said cup (1), said cup (1) has raised ribs (17) for guiding said drink of coffee.

14. Cup (1) according to one or more of the previous claims, **characterised in that** said ribs (17) are arranged perpendicular to the flow of said drink of coffee.

15. Cup (1) according to one or more of the previous claims, **characterised in that** it comprises a handle (24) connected to said cup (1), said handle (24) carrying a hooking element (26) rotatably connected, suitable for locking a portion of said filter (2) against a corresponding portion of said cup (1) when the coffee powder contained in said filter (2) is discharged.

16. Procedure for producing a ready formed drink of coffee, **characterised in that** the ready formed drink of coffee is sprayed through a dispenser capturing a first amount of air by outletting said drink of coffee substantially parallel with respect to the surface of a filtering wall (13) of a filter and against a side threaded surface extending substantially perpendicular with respect to said surface of said filtering wall (13), for forming a first froth, and is mixed with a flow of air capturing a second amount of air and forming further froth.

17. Procedure according to the previous claim, **characterised in that** the drink of coffee is formed inside a filter-hólding cup (1) and, when it is relenhanced from the cup (1), it draws in the current of air which strikes the drink of coffee subsequently sprayed by a dispenser (3).

## Patentansprüche

1. Filteraufnahme-Behälter (1) einer Kaffeemaschine, welcher eine Verteilereinheit (3) umfasst, welche mit dem genannten Filter (2) verbunden ist und einen Sprühstrahlausgang (34, 18) aufweist, welcher sich im Wesentlichen parallel mit Bezug auf die Oberfläche einer Filterwand (13) des genannten Filters erstreckt, wobei die Verteilereinheit in der Lage ist, ein Kaffeegetränk gegen eine Seitenoberfläche zu sprühen, welche sich im Wesentlichen senkrecht mit Bezug auf die genannte Oberfläche der Filterwand (13) des genannten Filters erstreckt, **dadurch gekennzeichnet, dass** die genannte Seitenoberfläche durch die Gewindegänge einer Buchse definiert wird, welche vor dem genannten Ausgang angeordnet sind.

2. Behälter (1) gemäß Anspruch 1, **dadurch gekennzeichnet, dass** er einen verbesserten Luftdurchlass (5, 6) umfasst, welcher zwischen dem genannten Behälter (1) und dem genannten Filter (2) definiert ist.

3. Behälter (1) gemäß einem oder mehreren der vorherigen Ansprüche, **dadurch gekennzeichnet, dass** der genannte verbesserte Durchlass (5, 6) mindestens eine Nut (5) an einem freistehenden Rand des genannten Behälters umfasst, und einen Zwischenraum (6) zwischen dem genannten Behälter (1) und dem genannten Filter (2).

4. Behälter (1) gemäß einem oder mehreren der vorherigen Ansprüche, **dadurch gekennzeichnet, dass** er ein bestimmtes Ausrichtmittel (7, 9) für den genannten Filter (2) mit Bezug auf den genannten Behälter (1) umfasst.

5. Behälter (1) gemäß einem oder mehreren der vorherigen Ansprüche, **dadurch gekennzeichnet, dass** das genannte bestimmte Ausrichtmittel (7, 9) eine gebogene Nase (7) umfasst, welche von einem Abschnitt des freistehenden Randes (8) des genannten Filters (2) hervorsteht, und in den nutartigen Sitz (9) des genannten Behälters (1) eingeführt wird.

6. Behälter (1) gemäß einem oder mehreren der vorherigen Ansprüche, **dadurch gekennzeichnet, dass** die genannte Verteilereinheit (3) eine Selbstreinigungsvorrichtung (30) umfasst.

7. Behälter (1) gemäß einem oder mehreren der vorherigen Ansprüche, **dadurch gekennzeichnet, dass** die genannte Selbstreinigungsvorrichtung ein scheibenartiges Element (31) umfasst, welches in seinem Zentrum einen Durchlass (32) aufweist, um ein Ventil (33) zum Schließen des genannten Durchlasses aufzunehmen, wobei zwischen dem genannten Ventil und dem genannten scheibenartigen Element eine Ausgangsöffnung (34) für das genannte Kaffeegetränk vorgesehen ist.

8. Behälter (1) gemäß einem oder mehreren der vorherigen Ansprüche, **dadurch gekennzeichnet, dass** das genannte Ventil eine Scheibe (35) umfasst, welche sich in dem genannten Ventilsitz entgegen und in Richtung der Kraftwirkung eines Federelementes (36) bewegen kann.

9. Behälter (1) gemäß einem oder mehreren der vorherigen Ansprüche, **dadurch gekennzeichnet, dass** er eine ringförmige Dichtung (37) aufweist, um das genannte scheibenartige Element mit der genannten Filterwand zu verbinden.

10. Behälter (1) gemäß einem oder mehreren der vorherigen Ansprüche, **dadurch gekennzeichnet, dass** die genannte Buchse (38) vorgesehen ist, um das genannte scheibenartige Element und die genannte Filterwand an dem genannten Filter zu befestigen.

11. Behälter (1) gemäß einem oder mehreren der vorherigen Ansprüche, **dadurch gekennzeichnet, dass** die genannte Buchse eine Basis (39) aufweist, und mindestens zwei Auslassschlitze (40) für das genannte Getränk.

12. Behälter (1) gemäß einem oder mehreren der vorherigen Ansprüche, **dadurch gekennzeichnet, dass** er mindestens eine erste Kammer (11) im Inneren des genannten Filters (2) umfasst, und eine zweite Kammer (12), welche zwischen der Filterwand (13) des genannten Filters (2) und der genannten Verteilereinheit (3) angeordnet ist.

13. Behälter (1) gemäß einem oder mehreren der vorherigen Ansprüche, **dadurch gekennzeichnet, dass** der genannte Behälter (1) in Übereinstimmung mit der Abflussöffnung (16) für das genannte Kaffeegetränk, welche an der Basis des genannten Behälters (1) gebildet ist, hoch stehende Leitelemente (17) aufweist, um das genannte Kaffeegetränk zu leiten.

14. Behälter (1) gemäß einem oder mehreren der vorherigen Ansprüche, **dadurch gekennzeichnet, dass** die genannten Leitelemente (17) senkrecht zur Strömungsrichtung des genannten Kaffeegetränks angeordnet sind.

15. Behälter (1) gemäß einem oder mehreren der vorherigen Ansprüche, **dadurch gekennzeichnet, dass** er einen Handgriff (24) umfasst, welcher mit dem genannten Behälter (1) verbunden ist, wobei der genannte Handgriff (24) einen Haltebügel (26) trägt, welcher drehbar gelagert ist, und welcher in der Lage ist, einen Bereich des genannten Filters (2) gegen einen entsprechenden Bereich des genannten Behälters (1) fixierend zu drücken, sobald das in dem genannten Filter (2) enthaltene Kaffeepulver entleert wird.

16. Verfahren zum Herstellen eines fertig zubereiteten Kaffeegetränks, **dadurch gekennzeichnet, dass** das fertig zubereitete Kaffeegetränk durch eine Verteilereinheit gesprüht wird, wobei es eine erste Luftmenge aufnimmt, indem das genannte Kaffeegetränk im Wesentlichen parallel mit Bezug auf die Oberfläche der Filterwand (13) des Filters strömt, und gegen eine mit Gewindegängen versehene Seitenwand, welche sich im Wesentlichen senkrecht mit Bezug auf die genannte Oberfläche der genannten Filterwand (13) erstreckt, um einen ersten Schaum zu bilden, und mit einem Luftstrom vermischt wird, wobei es eine zweite Luftmenge aufnimmt und einen weiteren Schaum bildet.

17. Verfahren gemäß dem vorherigen Anspruch, **dadurch gekennzeichnet, dass** das Kaffeegetränk im Inneren eines Filteraufnahme-Behälters (1) zubereitet wird, und es einen Luftstrom ansaugt, während es aus dem Behälter (1) austritt, welcher auf das Kaffeegetränk trifft, welches anschließend durch die Verteilereinheit (3) gesprüht wird.

## Revendications

1. Coupe porte-filtre (1) d'une machine à café, comprenant un distributeur (3) associée au dit filtre (2) et ayant un orifice gicleur (34, 18) s'étendant substantiellement d'une façon parallèle par rapport à la surface d'une paroi filtrante (13) dudit filtre, apte à gicler une boisson au café contre une surface latérale s'étendant substantiellement d'une façon perpendiculaire par rapport à ladite surface d'une paroi filtrante (13) dudit filtre, **caractérisée en ce que** ladite surface latérale est définie par les fils d'une douille, aménagée du côté frontal dudit orifice.

2. Coupe (1) selon la revendication 1, **caractérisée en ce qu'**il comprend un conduit d'aération renforcé (5, 6) défini entre ladite coupe (1) et ledit filtre (2).

3. Coupe (1) selon l'une ou plusieurs des revendications précédentes, **caractérisée en ce que** ledit conduit renforcé (5, 6) comprend au moins une rainure (5) d'une marge libre de ladite coupe, et un interstice (6) entre ledit coupe (1) et ledit filtre (2).

4. Coupe (1) selon l'une ou plusieurs des revendications précédentes dudit filtre (2) par rapport à ladite coupe (1).

5. Coupe (1) selon l'une ou plusieurs des revendications précédentes, **caractérisée en ce que** lesdits moyens d'aménagement établis (7, 9) comprennent une languette pliée (7) saillant d'une portion de la marge libre (8) dudit filtre (2) et insérée dans un siège rainuré (9) de ladite coupe (1).

6. Coupe (1) selon l'une ou plusieurs des revendications précédentes, **caractérisée en ce que** ledit distributeur (3) comprend un dispositif autonettoyant (30).

7. Coupe (1) selon l'une ou plusieurs des revendications précédentes, **caractérisée en ce que** ledit dispositif autonettoyant comprend un élément discoïdal (31) ayant à son centre un conduit (32) pour loger une vanne (33) en vue de fermer ledit conduit, entre ladite soupape et ledit élément discoïdal ayant prévu la présence d'un orifice (34) pour ladite boisson au café.

8. Coupe (1) selon l'une ou plusieurs des revendications précédentes, **caractérisée en ce que** ladite vanne possède un disc (35) qui est mobile dans ledit logement en contraste avec et moyennant l'action de moyens élastiques (36).

9. Coupe (1) selon l'une ou plusieurs des revendications précédentes, **caractérisée en ce qu'**elle possède un joint annulaire (37) pour associer ledit élément discoïdal avec ladite paroi filtrante.

10. Coupe (1) selon l'une ou plusieurs des revendications précédentes, **caractérisée en ce que** ladite douille (38) est insérée pour l'attelage dudit élément discoïdal et de ladite paroi filtrante audit filtre.

11. Coupe (1) selon l'une ou plusieurs des revendications précédentes, **caractérisée en ce que** ladite douille possède un embasement (39) et au moins deux fissures dans l'orifice (40) pour ladite boisson.

12. Coupe (1) selon l'une ou plusieurs des revendications précédentes, **caractérisée en ce qu'**elle comprend au moins une première chambre (11) à l'intérieur dudit filtre (2), et une seconde chambre (12) interposée entre ladite paroi filtrante (13) dudit filtre (2) et dudit distributeur (3).

13. Coupe (1) selon l'une ou plusieurs des revendications précédentes, **caractérisée en ce que** en correspondance des ouvertures de déversement (16) de ladite boisson au café formées sur un embasement de ladite coupe (1), ladite coupe (1) possède des nervures rehaussées (17) pour guider ladite boisson au café.

14. Coupe (1) selon l'une ou plusieurs des revendications précédentes, **caractérisée en ce que** lesdites nervures (17) sont aménagées d'une façon perpendiculaire par rapport au flux de ladite boisson au café.

15. Coupe (1) selon l'une ou plusieurs des revendications précédentes, **caractérisée en ce qu'**elle comprend une poignée (24) reliée à ladite coupe (1), ladite poignée (24) portant un élément d'accrochage (26) relié d'une façon pivotante, apte à verrouiller une portion dudit filtre (2) contre une portion correspondante de ladite coupe (1) lorsque la poudre de café contenue dans ledit filtre (2) est déversée.

16. Procédé pour produire une boisson au café rapidement préparée, **caractérisé en ce que** ladite boisson au café rapidement préparée est giclée à travers un distributeur capturant une première quantité d'air en déversant ladite boisson au café substantiellement d'une façon parallèle par rapport à la surface d'une paroi filtrante (13) d'un filtre et contre une surface latérale filetée s'étendant substantiellement d'une façon perpendiculaire par rapport à ladite surface de ladite paroi filtrante (13) pour former une première mousse, en la mélangeant avec un flux d'air capturant une seconde quantité d'air et formant davantage de mousse.

17. Procédé selon la revendication précédente, **caractérisé en ce que** ladite boisson au café est rapidement à l'intérieur de la coupe porte-filtre (1) et que, lorsqu'elle est sortie de la coupe (1), elle absorbe le courant d'air qui frappe la boisson au café giclée successivement par un distributeur (3).
